# EUROPEAN PATENT SPECIFICATION

(11) **EP 1 805 948 B1**
(45) Date of publication and mention of the grant of the patent: **07.12.2011**
(21) Application number: 04793804.8
(22) Date of filing: 19.10.2004
(51) Int. Cl.: H04L 12/56, H04L 29/06

(54) **SGSN AND GGSN INTEGRATION**
INTEGRATION VON SGSN UND GGSN
INTEGRATION DE NOUEDS SGSN ET GGSN

(43) Date of publication of application: 11.07.2007
(73) Proprietor: Telefonaktiebolaget L- M Ericsson (publ), 164 83 Stockholm (SE)
(72) Inventor: BACKMAN, Jan, S-442 71 Kärna (SE); SANDER, Ann-Christine, S-421 65 Västra Frölunda (SE)
(74) Representative: Vejgaard, Christian
(86) International application number: PCT/SE2004/001501
(87) International publication number: WO 2006/043860

(56) References cited:
- US-A1- 2004 037 269
- US-A1- 2004 120 314

## Description

### Field of the invention

The present invention relates to the field of core network components in radio access supported packet data networks. More specifically the invention relates to GPRS (General Packet Radio Standard), which is a packet based technology for wireless access systems, i.e. GSM and UMTS, and core components SGSN (Serving GPRS Support Node) and GGSN (Gateway GPRS Support Node). More particularly, the present invention relates to various aspects of co-located SGSN and GGSN functionalities, i.e. implementations in one physical node comprising both SGSN and GGSN functionality.

### Background of the invention

A common packet domain Core Network is used for both GSM and UMTS has for instance been specified by the 3'rd generation partnership project (3GPP) in technical specification, 3G TS 23.060 v3.4.0 (2000-07). More recent versions have been issued subsequently.

The structure and functions, such as the specified PDP context activation transmission has been explained in WO02/41592. Fig. 1 summarizes that in order to communicate GPRS data to/ from a mobile terminal, the mobile terminal first "attach" to a SGSN, subsequently an IP address is assigned to the mobile station according to the "PDP context procedure" and finally the "payload" data can be transmitted from the internet to the mobile station.

According to the 3GPP standardization, signaling between the SGSN / GGSN nodes is performed via the vendor independent GTP protocol.

It should be noted that the SGSN, GGSN and CGSN nodes can be physically deployed in many ways. It is understood that a given site providing mobile services may have a SGSN but not necessarily a GGSN. The SGSN of a given site may for instance address the Internet through the GGSN of another site.

### The CGSN

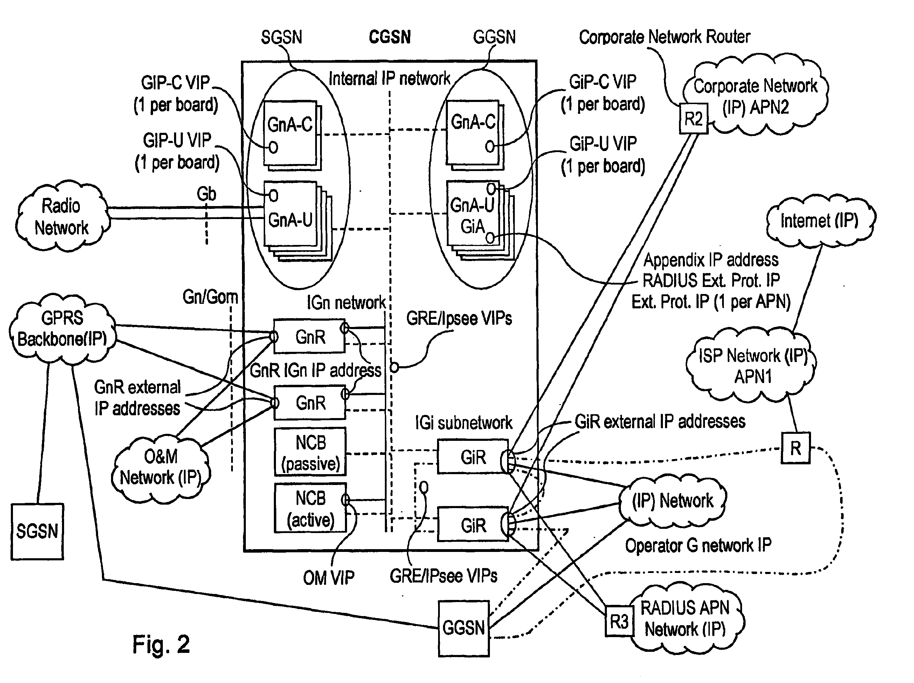

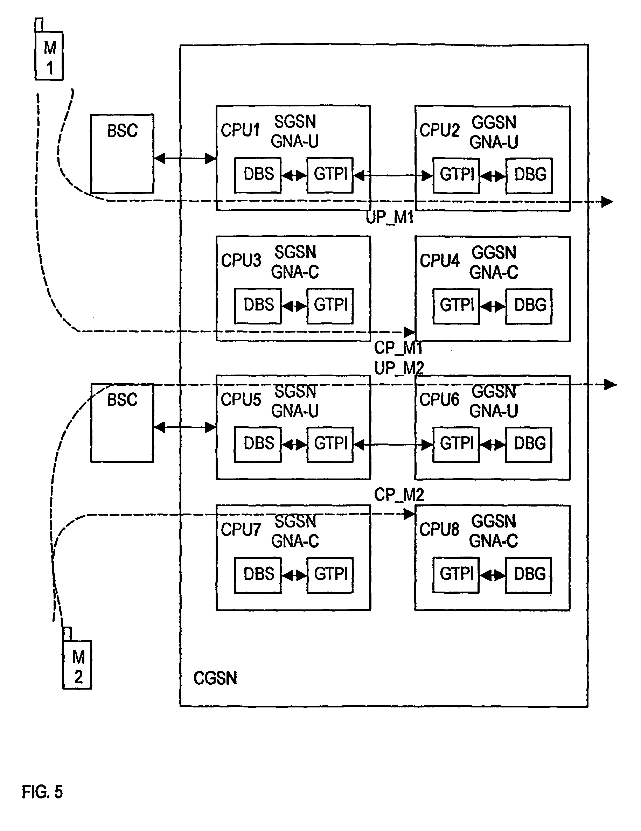

As pointed out in WO02/41592 the SGSN and GGSN functionalities may be combined in the same physical node, or they may reside in different physical nodes. At the time of filing the present application Ericsson provides a product denoted CGSN which basically constitutes a SGSN and GGSN co-located in the same rack. The current CGSN product comprises a GGSN specific part and a SGSN specific part, namely GGSN network cards for performing GGSN functionality, such as providing connectivity to Internet based services, and SGSN network cards for performing SGSN functionality, such as serving as a connectivity point to a radio base station (RBS). This has been illustrated in fig. 2 and 5, showing various aspects of the current Ericsson CGSN. Each respective SGSN / GGSN specific part comprises a GTP implementation, GTBI, a PDP context handling application, and a mobile station database, DBS, DBG. The GGSN specific database comprises mobile station specific information pertaining to Internet based services, such as Radius settings, while the SGSN specific mobile station specific database comprises other information such as bases station locality etc. Hence, in the existing CGSN implementation, the applications running on the nodes are separated, i.e. the SGSN application "does not know about" the GGSN application and vice versa. The content of the two SGSN and GGSN specific databases comprises some redundant information relating to the same given mobile station, but comprises also material, which is non-redundant. As concerns the common fields of the databases relating to the same given mobile station, updates to bring data in compliance with the most recent changes are off course required whenever there is a change in data content. The GGSN and SGSN network cards in the CGSN communicate over the GTP protocol. The various functional elements are provided on interface cards housing specific central processing units, CPU1 - CPU8, as shown in fig. 5. The control CP_M1 and user plane UP_M1 communication path for a mobile terminal M1 has been indicated in the CGSN. The corresponding paths for a second mobile terminal M2 has been shown.

From the viewpoint of an external GGSN or GGSN node, the co-located GGSN specific parts and the SGSN specific parts appears like separate entities that are separately addressable via IP addresses, hence the co-located SGSN and GGSN nodes appear as "normal", i.e. 3GPP standardized separate nodes. However, from the viewpoint of the operation and maintenance interface, OSS, the Ericsson CGSN product appears as "one" product

In fig. 2, a diagram for the Ericsson CGSN node has been shown in more detail, comprising:

### Gn router (GnR)

A router PIU (Plug In Unit) directly connected to the Gn interface. In other words, the PIU is connected to the Gn network (GPRS backbone.) The GnR works as a normal router. Looking at the GSNs from the outside the two Gn router PIUs are two separate routers, where each router runs its own protocol stack. The O&M traffic in CGSN is handled by the GnRs.

### Gn Application (GnA)

The Gn applications have been separated into those which handle user traffic, GnA-U and those who handle control traffic, GnA-C. The control and user plane PIUs can through the Gn router PIUs communicate with hosts on the Gn network (GPRS backbone). GTP encapsulation is an example of GnA functionality. In GGSN/CGSN, the GnA may co-exist with GiA on the same PIU depending on configuration. A GnA-U interface is provided for each respective SGSN and GGSN parts.

### Gi router PIU (GiR)

A router PIU directly connected to the Gi interface. In other words, the PIU is connected to a Gi network (Corporate Network or ISP.) The Gi router PIU handles both normal IP routing and APN routing. A Gi router PIU has means for connecting to several external networks that have colliding private IP addresses. Looking at the GGSN from the outside the two Gi router PIUs are two separate routers, where each router runs its own protocol stack.

### Gi Application (GiA)

The GiA can through the Gi router PIUs communicate with hosts on the Gi network (Corporate Network or Internet.) The ISP device is for example a Gi Application. The Gi Application has usual router functionality. In GGSN/CGSN, the GiA may co-exist with GnA on the same PIU depending on configuration.

NCB (Node Control Board). It is possible to access other GPBs via this Plug-in Unit. There is a passive NCB PIU that automatically takes over if the active NCB PIU fails.

### SS7 FE/BE

The SS7 FE module provides E1/T1 connectivity for Gr, Gs and Gd. The SS7 BE provides the SS7 stack and process SS7 information. The FE and BE module may co-exist on the same PIU.

### PDP context activation in the CGSN

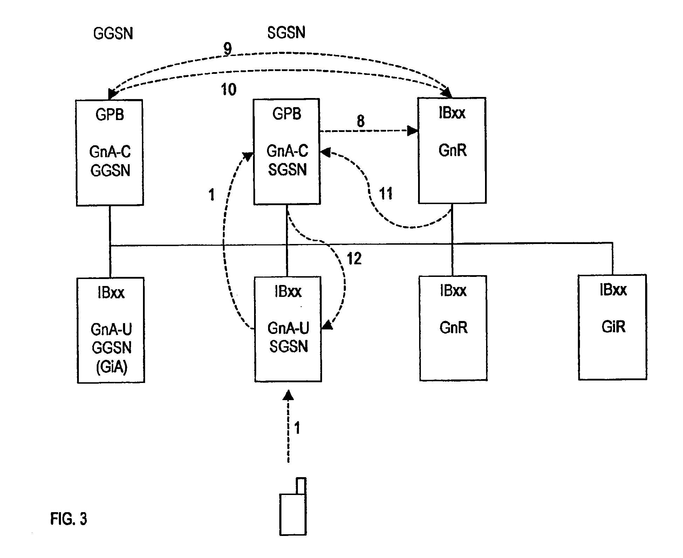

The interaction diagram in fig. 3 shows the signaling of the PDP Context Activation in the CGSN.
- 1 An "Activate PDP Context Request" is received from the MS via the BSC (NS FR). The request is processed by the GnA-C the MS belongs to (where its MM information is stored).
- 2 To find the associated GGSN, a DNS query is sent to the Caching-Only DNS on NCB (i.e. the SGSN internal DNS). (Steps 2 - 7 are performed outside the CGSN and are not illustrated).
- 3 If the Caching-only DNS on the NCB does not have matching GGSN, it will forward the query (iteratively) to the external DNS via the GomR using the OM VIP on the NCB as the source IP address.
- 4 The GomR forwards the DNS query to the external DNS.
- 5 The GomR receives the DNS reply that contains a list of GGSN IP addresses.
- 6 The GomR forwards the DNS reply to the NCB, using a forwarding table for the incoming DNS reply destined to the OM VIP. If the Caching-only DNS on the NCB had a matching entry, round-robin (rotation) is performed on the list of GGSN IP addresses before it is sent to the GnA-C.
- 7 The DNS Reply is received by the GnA-C from the NCB. A GnA-U for payload is selected and the GTP-U VIP for that PIU is retrieved.
- 8 The "Create PDP Context Request" is sent to the GGSN using the GTP-C VIP on the GnA-C as source IP address. There are two GTP VIP addresses included in the message - one for control traffic and the one for downlink payload. Further, two TEIDs (for GTPv0; a TID, a Flow Label Data I and a Flow Label Signaling are sent instead of TEIDs) are included in the message, one for control traffic and one for downlink payload. These TEIDs (for GTPv0 TID, Flow Label Data I, for downlink signaling, and Flow Label Signaling, for downlink payload, are sent instead of TEIDs) are generated by the SGSN.
- 9 GnR forwards the "Create PDP Context Request" to the Gn network (GPRS backbone).
- 10 In the "Create PDP Context Response" the GGSN includes (in a similar manner) two IP addresses - one for control and one for uplink payload - plus one IP address for the MS (unless it has a static IP address configured), and two TEIDs (for GTPv0 TID, Flow Label Data I and Flow Label Signaling are received instead of TEIDs).
- 11 The GnR uses a forwarding table to find the correct GnA-C to forward the incoming Response to.
- 12 An "Activate PDP Context Accept" is sent to the MS including its assigned IP address.

### GSM payload in the user plane

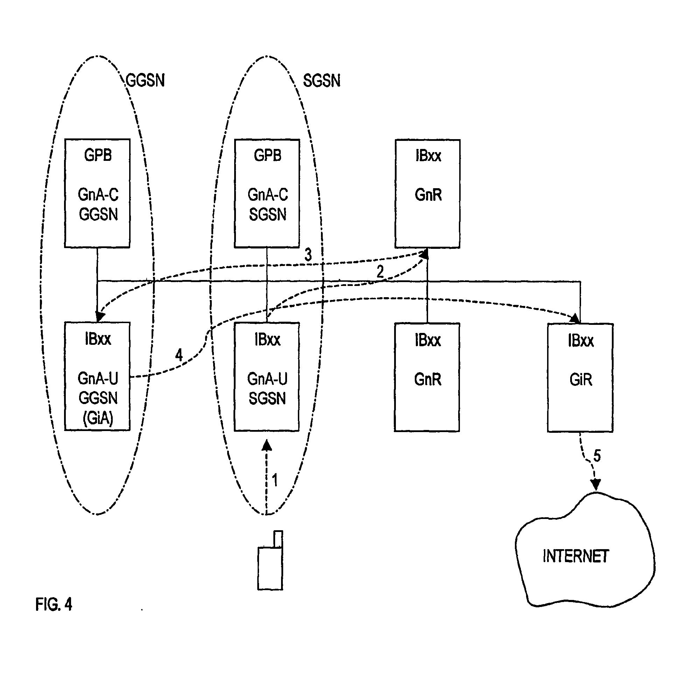

In fig. 4, the procedure for a GSM payload transmission in the CGSN has been illustrated:
- 1 The MS transmits an IP packet destined for an Internet host The IP packet is transported to the SGSN over L2 protocols.
- 2 The GnA encapsulates the IP packet in a GTP/UDP/IP header. It is then forwarded to the GnR.
- 3 The GnR uses a forwarding table to route the incoming GTP packet based on the GTP VIP address to the appropriate GnA.
   (In a CGSN, the GTP packet is re-routed by the GnRs to the GGSN part.)
- 4 Subsequently, the GnA removes the GTP/UDP/IP header and the original IP packet is transported by use of an Internal L2 tunnel to forward the IP packet to the GiR 5. The receiving GiR forwards the packet towards the Internet host. The IP packet is routed through the ISP network and Internet before it finally ends up at the internet host.

Some drawbacks with existing separate SGSN and GGSN and CGSN implementations are that
- It is difficult to re-use information between the SGSN and GGSN applications, since it requires additions (vendor specific, or not) to the GTP protocol.
- There is a substantial tunneling overhead between the SGSN and GGSN; this means that there is a substantival end-user bandwidth loss. This problem will aggravate if or when VolP becomes widely accepted.

Prior art document US2004/0120314 shows a general packet radio services support node (GSN) for supporting general packet radio services over a global system for mobile communications network is provided. The GSN comprises single board processor (SBC) and line card processor circuit consisting of line cards. The GSN provides general packet radio services functionality which is required for each call being serviced and for providing general packet radio services functionality which is required for each packet being serviced, The GSN may function as a SGSN, GGSN or both. SGSN functionality is implemented on SBC and line card processor circuit, while GGSN functionality is arranged on SBC and on the line card processor circuit. A peripheral component interconnect bus and an external ATM bus are provided.

When functioning as a SGSN, the single board computer supports one or more of radio resource management, authentication and mobility management. The radio resource management comprises cell selection management, call path management and Un interface management The mobility management comprises line management and logical link establishment, maintenance and release. The line card processor supports, an encryption function, a compression function or one or more of routing and tunneling functions. When functioning as a GGSN, the single board computer supports session management functionality. The line card processor may supports address translation functionality, access control functionality, or one or more of routing and tunnelling functions. The above node does not allow for a sufficient flexible allocation of mobile terminals to resources as desired.

### Summary of the invention

The invention seeks to reduce the signaling overhead and the associated transmission delay in a combined node.

This object has been accomplished by claim 1.

It is another object to set forth a method for an efficient allocation of resources in a combined node.

This object has been accomplished by the method according to claim 4.

Further advantages will appear from the following detailed description of the invention.

### Brief description of the drawings.

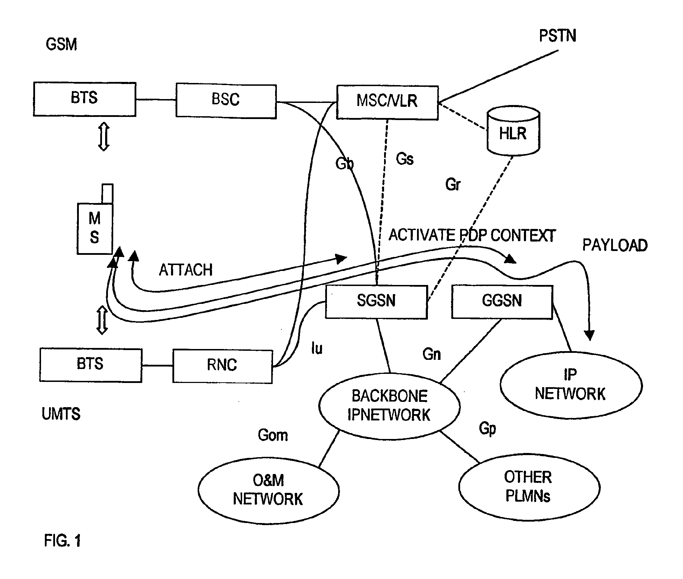

- Fig. 1: shows prior art Attach, activate PDP context and payload signaling,
- fig. 2: shows a known CGSN architecture sold by Ericsson,

- fig. 3: shows a control plane routine in the GGSN node according to fig. 2,
- fig. 4: shows a payload being transmitted in the CGSN of fig. 2,
- fig. 5: shows the control plane (CP) and user plane (UP) resource allocations for two mobile terminals MT1 and MT2 in the CGSN of fig. 2,
- fig. 6: shows a preferred embodiment of the invention, in which exemplary control plane (CP) and user plane (UP) resource allocations for two mobile terminals MT1 and MT2 in the CGSN are indicated,
- fig. 7: shows a first embodiment of an application unit, AU, according to the invention,
- fig. 8: shows second and third embodiments of application units according to the invention,
- fig. 9: is a schematic representation of a resource allocation method according to the invention,
- fig. 10: illustrates a control plane routine in the CGSN node according to a preferred embodiment of the invention,
- fig. 11: illustrates a payload being transmitted in the CGSN of the preferred embodiment of the invention,
- fig. 12: shows a control plane activation for the first application unit, and
- fig. 13: shows a payload plane signaling for the first application unit

### Detailed description of preferred embodiments of the invention

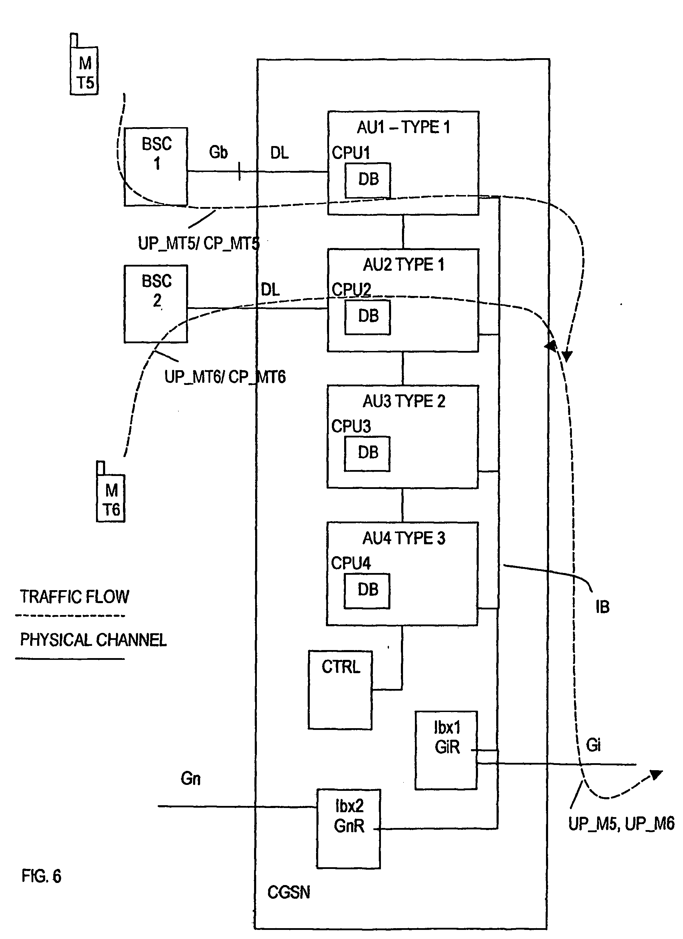

In fig. 6, a preferred embodiment of a co-located SGSN/GGSN (CGSN) node according to the invention has been illustrated.

The CGSN comprises a plurality of application units, AU1 - AU4, an internal bus, IB, a first interface board IBx1 accommodating a GiR router, GiR, offering a Gn interface and a second interface board, IBx2, accommodating a GnR router, offering a Gi interface. According to one embodiment the CGSN moreover comprises control unit, CTRL, for monitoring and allocating resources. Alternatively, the control functionality of the control unit may be distributed in each application unit (not shown).

According to a further embodiment of the CGSN node according to the invention the Ibx2 interface board providing the Gn interface may be omitted from the CGSN.

The application units AU1 and AU2 are coupled to base station controllers BSC1 and BSC 2 over respective direct links, DL, forming Gb interfaces.

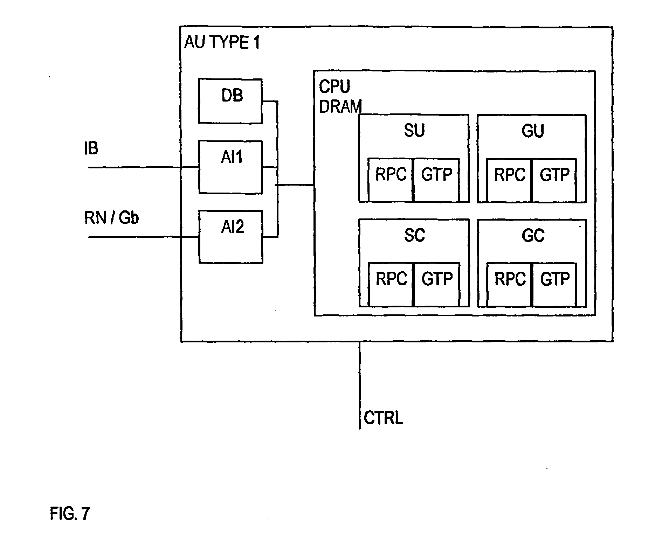

In fig. 7, a first embodiment of the application unit, denoted type 1, according to the invention has been shown in further detail. The application unit comprises a database, DB, a first application unit interface, AI1, providing connectivity to the internal bus, IB, a second application interface AI2, constituting a Gb interface to the radio network. The type 1 application unit comprises: SGSN user plane functionality, SU; SGSN control plane functionality, SC; GGSN user plane functionality, GU, and GGSN control plane functionality, GC. Each individual functionality of the above application unit are all available to at least one given mobile terminal such that the resources of a given application unit may be allocated to given mobile terminals in an arbitrary manner. The data which is necessary for the given call / session associated with a given mobile terminal in the radio network is stored in the database, DB. According to the invention, the serving node user plane functionality, SU, serving node control plane functionality, SC, gateway node user plane functionality, GU and gateway node control plane functionality, GC are software applications running on the application unit, AU. The application unit according to the preferred embodiment according to fig. 7 according to the invention may comprise a central processing unit (CPU) and a random access memory (DRAM) for executing the above applications.

Inter application unit communication - within the CGSN - may be performed by processor calls, e.g. remote procedure calls (RPC) from a central processing unit of a first unit to another central processing unit of another unit. Alternatively, inter application unit communication may be performed by means of GTP tunnels. Both means have been indicated as being part of the software application running in the CPU of the application unit in fig. 7. According to one advantageous embodiment of the invention, no GTP interfaces are needed for intra-CGSN traffic over the internal communication bus.

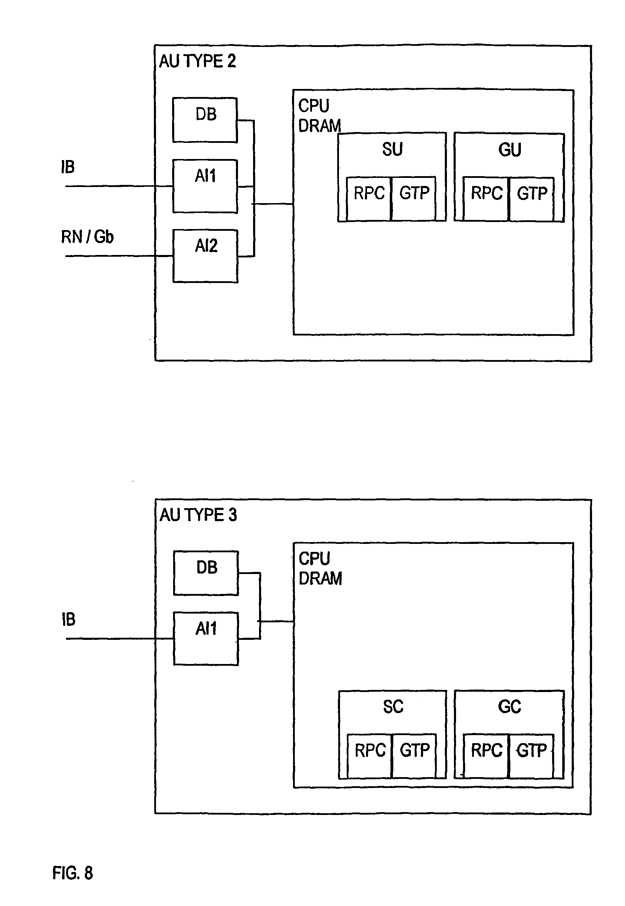

A second type of application unit, type 2, has been indicated in fig. 8, which is identical to type 1, except for not having the serving node control plane functionality, SC and gateway node control plane functionality, GC. A third type of application unit, type 3, has moreover been indicated in fig. 8, which is identical to the first type, except not having serving node user plane functionality, SU and gateway node user plane functionality, GU and not having a Gb interface. The second and third types cooperate to provide the desired functionalities.

According to one embodiment of the CGSN according the invention as shown in fig. 6, there may be provided two type-1 application units, AU1 and AU2, a type-2, application unit, AU3, and a type-3 application unit, AU4. Other combinations are possible; one practical application may for instance consist of four type-2 application units and four type-3 application units. Still another embodiment may comprise four type 1 application units.

As mentioned above, the resources of each application unit may be allocated to given mobile terminals in an arbitrary manner, which shall be exemplified by the table below: For instance, a mobile terminal MT1, may be allocated resources: SGSN user plane handling on AU1, while GGSN user plane handling, gateway node user plane functionality, GU, SGSN and GGSN control plane handling on application unit AU2 (MT1).

Other possible configurations appear for terminals MT2 to MT6 in table 1.

**Table 1.**

| | AU1 | AU1 | AU1 | AU1 | AU2 | AU2 | AU2 | AU2 |
|---|---|---|---|---|---|---|---|---|
| | SU | GU | SC | GC | SU | GU | SC | GC |
| MT1 | **X** | | | | | **X** | **X** | **X** |
| MT2 | | **X** | **X** | | **X** | | | **X** |
| MT3 | **X** | **X** | | | | | **X** | **X** |
| MT4 | | | **X** | **X** | **X** | **X** | | |
| MT5 | **X** | **X** | **X** | **X** | | | | |
| MT6 | | | | | **X** | **X** | **X** | **X** |

Two preferred allocations have been shown for mobile terminals MT5 and MT6 in table 1 and fig. 6. According to this allocation, all user plane, UP, and control plane, CP, signaling for both the SGSN functionality and the GGSN functionality for a given mobile terminal are gathered on a single respective application unit, AU.

In this manner, the data necessary for the given PDP contexts for each terminal is gathered on a single database on each application unit This leads to a reduction of redundant data, which hitherto had been distributed on several application units. Moreover, since the databases are located on the application units, the allocation ensures quicker access to data. Further advantages shall be dealt with later.

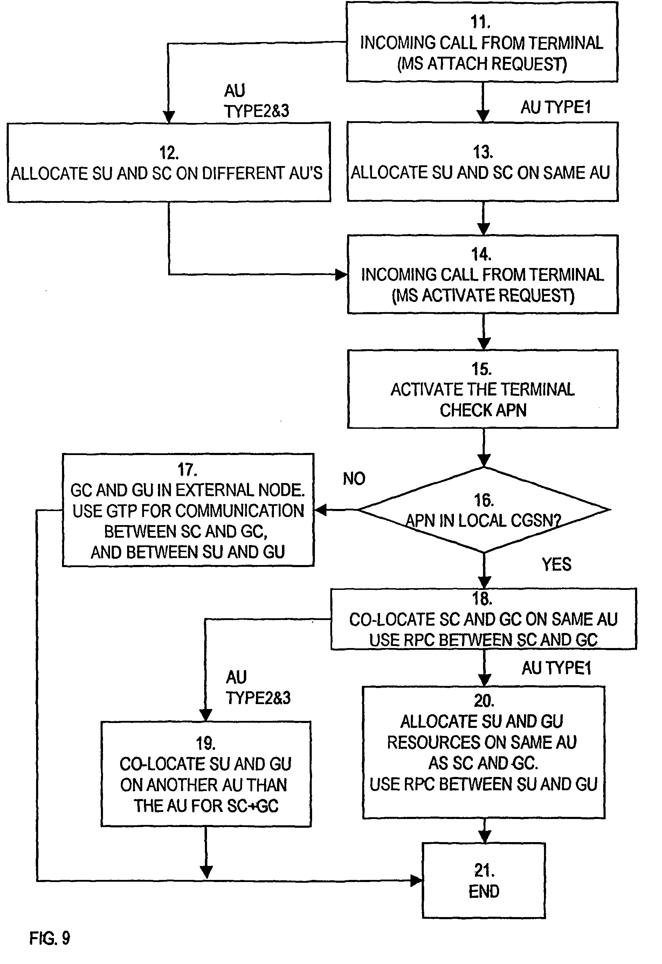

In fig. 9, a preferred routine for allocating the resources of the prevalent application units to mobile terminals connected to the mobile radio network is shown. The carrying out of this routine may be performed by the control unit, CTRL, shown in fig. 6 or alternatively by a distributed control functionality (not shown) of each application unit

Step 11 - a call is received from a terminal in a local CGSN. For instance, the call may be received on the Gb interface as shown in fig. 6 for mobile terminal MT5. (The serving node control plane functionality, SC functionality (confer type 1 or type 3 application unit AU) of the given application unit, AU, receiving the call over the Gb interface on a direct link DL is assigned for the given call. The MS sends an Attach Request to SGSN. The Attach Request is received on a certain serving node user plane functionality, SU, which will handle all traffic to/from this MT.

The control unit (CTRL) of the SGSN parts may use the identifiers of the MT (IMTI, TLLI etc) to select which serving node control plane functionality, SC in the CGSN parts that shall handle a certain subscriber.

Step 12 - If the application unit AU is not type 1:
Serving node user plane functionality, SU and serving node control plane functionality, SC are located on different application unit AU.

Step 13 - If the application unit AU is of type 1:
Serving node user plane functionality, SU and serving node control plane functionality, SC, are co-located on the same application unit AU.

Step 14 - The serving node user plane functionality, SU forwards the Attach Request to the chosen serving node control plane functionality, SC. The serving node control plane functionality, SC processes the message and gets subscription data from HLR, which is stored in the database on the serving node control plane functionality, SC. The serving node control plane functionality, SC forwards an Attach Accept to the serving node user plane functionality, SU, together with necessary information. The serving node user plane functionality, SU will send the Attach Accept to the MT, and it will also store relevant data in its database.

The gateway control plane functionality, GC and gateway node user plane functionality, GU) are not involved in the Attach handling.

Step 15 - The mobile terminal MT sends an Activate Request to the SGSN part. The Activate Request is received on the same serving node user plane functionality, SU as the Attach Request.

The serving node user plane functionality, SU has stored in its database which serving node control plane functionality, SC that handles this MT. The Activate Request is forwarded to this serving node control plane functionality, SC.

The Activate Request contains an APN (Access Point Name), and the serving node control plane functionality, SC resolves this APN by using DNS servers (internal or external to the CGSN).

The resolution logic results in an IP-address of a GGSN.

Step 16 - The serving node control plane functionality, SC determines if this IP address points at the GGSN part of this CGSN, or if it is an IP-address of an external GGSN.

Step 17 - If the IP-address points at an external GGSN:

The gateway node control plane functionality, GC and gateway node user plane functionality, GU for this MT cannot be allocated in the CGSN.

GTP is to be used for communication to the GGSN, both for control plane CP and user plane UP.

The serving node control plane functionality, SC constructs a GTP message, Create PDP Context Request, which is forwarded to the GnR, which in its turn forwards it to the GGSN.

Step 18 - If the IP-address points at the internal GGSN:
The gateway node control plane functionality, GC and gateway node user plane functionality, GU for this MT can be allocated in the local CGSN. The gateway node control plane functionality, GC is co-located on the same application unit AU as the serving node control plane functionality, SC.
GTP is not needed between serving node control plane functionality, SC and gateway node control plane functionality, GC. RPC or a similar mechanism can be used for communication between the gateway node control plane functionality, GC and the serving node control plane functional GTP is not needed

Step 19 - If the application unit AU is not type 1: The gateway user plane functionality GU is co-located on the same application unit AU as the serving node user plane functionality SU, but not on the same application unit AU as the serving node control plane functionality SC and gateway node control plane functionality GC. All communication between gateway control plane functionality GC and gateway user plane functionality GU is non-GTP, irrespective of application unit AU type, irrespective of CGSN or not. All communication between serving node control plane functionality SC and serving node user plane functionality SU is non-GTP, irrespective of application unit AU type, irrespective of CGSN or not

Step 20 - If the application unit AU is type 1: The gateway control plane functionality GC and the gateway user plane functionality GU for this mobile terminal MT can be allocated in the present CGSN. The gateway control plane functionality GC and gateway user plane functionality GU is co-located on the same application unit AU as the serving node control plane functionality SC and the serving node user plane functionality SU. GTP is not needed.

### Control and user plane signaling of preferred embodiment

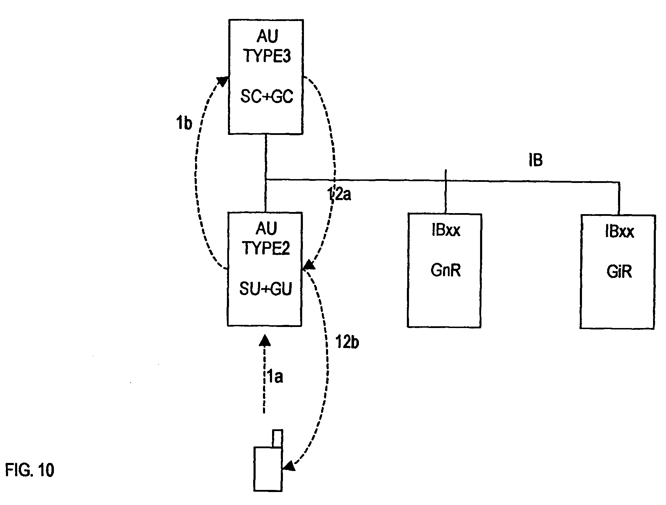

In fig. 10, an exemplary control plane signaling for a PDP context activation according to the invention has been shown for an allocation consisting of type-2 and type-3 application units.

The following steps are carried out:
- 1a A PDP context activation is received at application unit AU type-2;
- 1b the PDP context activation is transmitted to application unit AU type-3,
- 12a an "Activate PDP Context Accept" message including the assigned IP address is transmitted from application unit AU type-3 to application unit AU type-2,
- 12b the PDP context activation is forwarded to the mobile terminal.

Please note that the reference signs corresponding to the prior art procedure of fig. 3 has been retained. It is moreover noted that if all functionalities are collocated on the same type-1 application unit, the signaling occurs internally in the application unit.

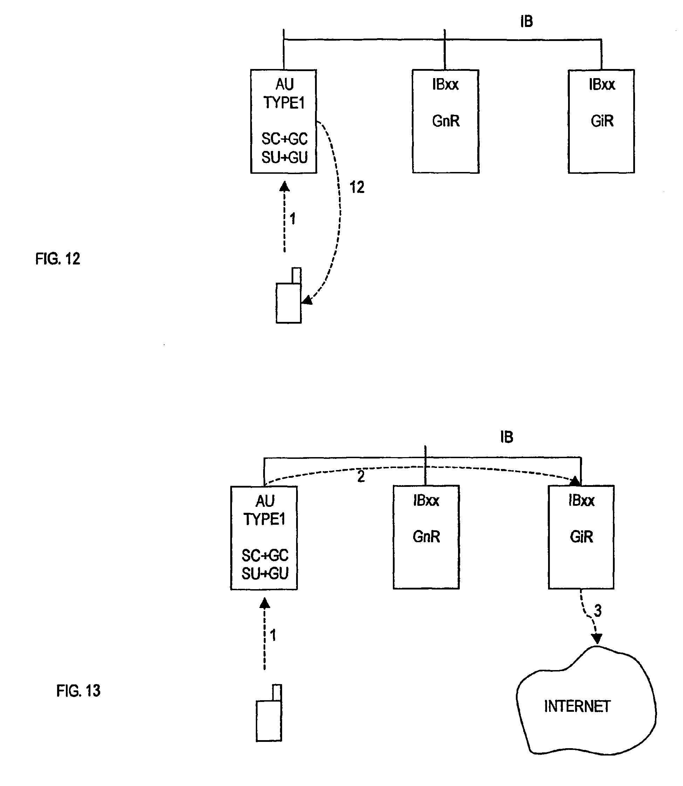

In fig. 12, the corresponding steps for the control plane activation for a type 1 application unit have been shown.

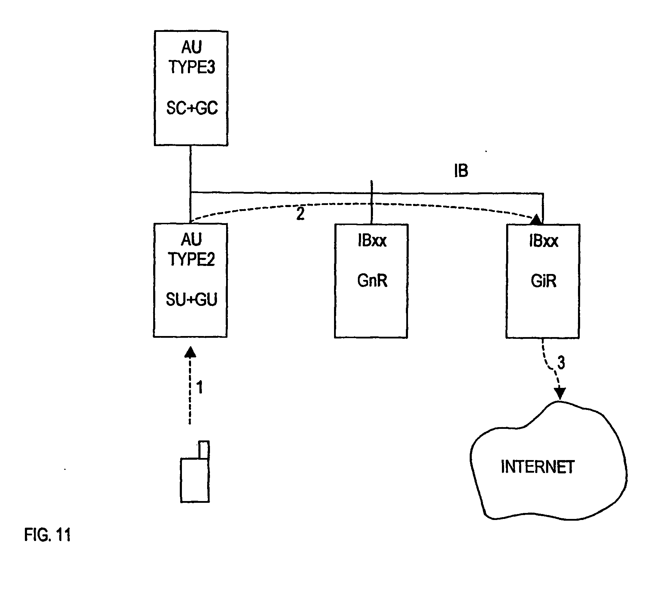

In fig. 11, the steps carried out for performing a GSM payload transmission from the mobile station to a server on the Internet has been shown:
- 1 The MT transmits an IP packet destined for an internet host, the packet is received on the GnA-U interface in the "SGSN part" of the CGSN according to the invention.
- 2 The packet is directly forwarded to the GiR router
- 3 The packet is transmitted to the host on the Internet

In fig. 13 the corresponding steps for the user plane activation for the type 1 application unit has been shown.

### Advantages of the various embodiments of the invention:

The present invention utilizes resources (memory, processor utilization etc) more efficiently, which leads to less manufacturing costs. It moreover appears that there will be lower delays in both control plane and user plane signaling, since packets are handled internally and therefore are not experiencing transmission delays over Gn. Packets also enjoy a smaller risk of being dropped.

One aspect of the present invention deals more effectively with error situations by providing better network availability for a user by using the same CPU(s) for the SGSN and GGSN functionality of a call.

According to the invention, network redundancy on the lu/Gb interface (SGSN pooling) is facilitated, such that there is no need to have yet another mobility interface within an operators' network. I.e. the Gn interface is unnecessary, only the Gp interface is needed for access to other GPRS networks. If and when pooling is introduced towards the RNC and BSC, change of SGSN will be very rare. This means that the Gn interface typically gives a flexibility that is not needed.

The current evolution of having more charging functionality in the GGSN means that more information needs to be signaled from the SGSN to the GGSN. This task is simplified by the present invention since the SGSN and GGSN databases reside on the same CPU, which makes a more efficient data sharing possible between SGSN and GGSN. In the existing GPRS networks it also requires proprietary extensions to be able to share non-standardized information between SGSN and GGSN. The present invention deals more effectively with this situation by providing better network availability for a user by using the same CPU(s) for the SGSN and GGSN functionality of a call. With less spreading of users over different CPUs, fewer users are affected when CPU's crash due to software or hardware errors. Clean up after errors are also easier accomplished than in known solutions.

From an operator perspective, the network dimensioning is rendered easier since it involves fewer interfaces and fewer nodes of various performance levels. Currently, operators tend to have the same APN on all GGSNs, especially for services like WAP. This means that the Gn interface is typically not necessary.

Short-lived PDP-contexts are currently a trend. This incurs excessive non end-user traffic signaling over the Gn interface. Without the Gn interface it is not necessary to dimension for this case.

The use of SGSN database information in GGSN and vice versa additionally leads to the following improvements/ possibilities:
- FBC (Flexible Bearer Charging) in GGSN can have access to packet loss information for a PDP context from SGSN; this enables more accurate charging in GGSN. See also charging above.
- The invention makes it possible to send ICMP host unreachable messages from GGSN functionalities when the logical SGSN has lost contact with the MT, which then implicitly tells the sending party that the IP address of the MT currently is not reachable.
- Positioning services can be used by the GGSN (GU + gateway node control plane functionality, GC) and thereby location based charging combined with FBC (Flexible Bearer Charging) in the GGSN is possible. It is made possible since the gateway node control plane functionality, GC has access to the serving node control plane functionality, SC DB on the same Al, and the GGSN can therefore use the MT location knowledge of the SGSN.
- Network initiated PDP context activation is much easier to implement, since the GGSN has access to the SGSN (DB) without using it as a relay for queries. The GGSN can also determine if the MT to be activated is residing in the same CGSN, without sending a node-external GTP query. It is currently a problem if a certain PDP Context is lost in a GGSN, while it remains in the SGSN. This can occur in different error situations, and can sometimes give a large number of "hanging" PDP contexts in the GGSN. This problem is removed by having the serving node control plane functionality, SC and gateway node control plane functionality, GC sharing the same database DB, which means that if the SGSN PDP Context is removed, also the GGSN counterpart is automatically removed as well.

### Abbreviations

- APN: Access Point Name
- AQM: Active Queue Management
- CGSN: Combined GPRS Support Node
- FBC: Flexible Bearer Charging
- GC: GGSN control plane functionality
- GGSN: Gateway GPRS Support Node
- GPRS: General Packet Radio Service
- GSM: Generic System for Mobile communication
- GTP: GPRS Tunneling Protocol
- GU: GGSN user plane functionality
- ICMP: internet Control Message Protocol
- IP: Internet Protocol
- MSS: Maximum Segment Size
- MT: Mobile Terminal
- NCS: Node Control System
- RNC: Radio Network Controller
- SC: SGSN control plane functionality
- SGSN: Serving GPRS Support Node
- SS7: Signaling System #7
- SU: SGSN user plane functionality
- TCP: Transmission Control Protocol
- UMTS: Universal Mobile Telephony System
- WPP: Wireless Packet Platform

## Claims

1. Combined node (CGSN) comprising, a routing unit (GiR) providing a network interface (Gi) through which routing unit user plane data packets can be transmitted to at least the internet, and an internal bus (IB), the combined node further comprising
a first application unit (AU TYPE2, AU TYPE1) comprising a serving node user plane functionality (SU) and a gateway node user plane functionality (GU), each individual functionality of the first application unit (AU) may be allocated to at least one mobile terminal (MT);
a second application unit (AU TYPE3, AU TYPE 1) comprising a serving node control plane functionality (SC) and a gateway node control plane functionality (GC), each individual functionality of the second application unit (AU) may be allocated to at least said one or another mobile terminal (MT);
each application unit (AU) moreover comprising a database (DB) which comprises data necessary for the given call / session associated with a given mobile terminal,
wherein each application unit (AU) comprises at least a central processing unit (CPU) and a random access memory (RAM) and wherein the serving node user plane functionality (SU), the serving node control plane functionality (SC), the gateway node user plane functionality (GU) and the gateway node control plane functionality (GC) are software applications; and wherein inter application unit communication within said combined node (CGSN) is performed by remote procedure calls (RPC) from a central processing unit (CPU) of an application unit (AU) to the central processing unit of another application unit (AU) over the internal bus.

2. Combined node according to claim 1, wherein the first application unit (AU TYPE1) moreover comprises a serving node control plane functionality (SC) and a gateway node control plane functionality. (GC).

3. Combined node according to claim 1 or 2, wherein the second application unit. (AU TYPE1) moreover comprises a serving node user plane functionality (SU) and a gateway node user plane functionality (GU).

4. Method of allocating available resources in a combined node (CGSN) to at least one mobile terminal (MT),
the combined node (CGSN) comprising, at least a first application unit (AU TYPE 2, AU TYPE1). a second application unit (AU TYPE 3, AU TYPE1), a routing unit (GiR) providing a network interface (Gi) through which routing unit user plane data packets can be transmitted to at least the internet, whereby
a first application unit (AU TYPE2, AU TYPE1) comprising a serving node user plane functionality (SU) and a gateway node user plane functionality (GU), each individual functionality of the first application unit may be allocated to said at least one mobile terminal (MT);
a second application unit (AU TYPE3, AU TYPE 1) comprising a serving node control plane functionality (SC) and a gateway node control plane functionality (GC). each individual functionality of the second application unit may be allocated to at said least said or another mobile terminal (MT);
each application unit (AU) moreover comprising a database (DB) which comprises data necessary for a given call / session associated with a given mobile terminal, the method comprising the following steps:
- receiving (11) a call comprising an Attach Request from a given mobile terminal on the user plane functionality (SU) of the first application unit (AU);
- the serving node user plane functionality (SU) forwarding the Attach Request to the serving node control plane functionality (BSC), which forwards an Attach Accept to the serving node user plane functionality (SU), which forwards the Attach Accept to said given mobile terminal (14):
- the serving node user plane functionality (SU) receiving an Activate Request from said given mobile terminal (MT) (15);
- checking (16) whether an IP address resolved from an access point name (APN) of the Activate Request from said given mobile terminal points at the combined node (CGSN), and if so
- co-locating (18) the serving node control plane functionality (SC) and the gateway node control plane functionality (GC) on the same application unit (AU), wherein the gateway node control plane functionality (GC) and the serving node control plane functionality (SC) of the second application unit (AU) is allocated to said given mobilen terminal.

5. Method according to claim 4, wherein if the IP address resolved from the access point name (APN) of the Activate Request from the mobile terminal does not point at the combined node (CGSN);
- allocating (17) the gateway node user plane functionality (GU) and gateway node control plane functionality (GC) in an external node and using GTP (GPRS tunneling protocol) for communication between the serving node control plane functionality (SC) and the gateway node control plane functionality (GC) and between the serving node user plane functionality (SU) and the gateway node user plane functionality (GU).

6. Method according to claim 4, wherein the serving node user plane functionality (SU) and the gateway node user plane functionality (GU) of the first application unit (AU TYPE2) (19, 20) are allocated to the given mobile terminal.

7. Method according to claim 4, wherein the first application unit (AU TYPE1) moreover comprises a serving node control plane functionality (SC) and a gateway node control plane functionality (GC);
- wherein the serving node user plane functionality (SU); the serving node control plane functionality (SC), the gateway node user plane functionality (GU) and the gateway node control plane functionality (GC) of the first application unit (AU TYPE1) are allocated to the given mobile terminal (20).

8. Method according to claim 7, wherein the serving node control plane functionality (SC) is allocated (13) to the given application unit (AU TYPE1), receiving the call.

9. Method according to claim 4, wherein the serving node user plane functionality (SU) and the serving node control plane functionality (SC) are allocated (12) on different application units (AU TYPE 2, AU TYPE 3).

## Patentansprüche

1. Kombinierter Knoten (CGSN), umfassend: eine Leitweglenkungseinheit (GiR), die eine Netzwerkschnittstelle (Gi) bereitstellt, wobei über diese Leitweglenkungseinheit Datenpakete der Benutzerebene mindestens zum Internet übertragen werden können, und einen internen Bus (IB), wobei der kombinierte Knoten ferner umfasst:
eine erste Anwendungseinheit (AU TYP2, AU TYP1), die eine Serving-Knoten-Benutzerebenenfunktionalität (SU) und eine Gateway-Knoten-Benutzerebenenfunktionalität (GU) umfasst, wobei jede einzelne Funktionalität der ersten Anwendungseinheit (AU) mindestens einem mobilen Endgerät (MT) zugewiesen werden kann;
eine zweite Anwendungseinheit (AU TYP3, AU TYP1), die eine Serving-Knoten-Steuerungsebenenfunktionalität (SC) und eine Gateway-Knoten-Steuerungsebenenfunktionalität (GC) umfasst, wobei jede einzelne Funktionalität der zweiten Anwendungseinheit (AU) mindestens dem einen oder einem anderen mobilen Endgerät (MT) zugewiesen werden kann;
wobei jede Anwendungseinheit (AU) außerdem eine Datenbasis (DB) umfasst, die Daten umfasst, die für den gegebenen Ruf / die gegebene Sitzung, der bzw. die einem gegebenen mobilen Endgerät zugeordnet ist, nötig sind,
wobei jede Anwendungseinheit (AU) mindestens eine Zentralverarbeitungseinheit (CPU) und einen Direktzugriffsspeicher (RAM) umfasst und wobei die Serving-Knoten-Benutzerebenenfunktionalität (SU), die Serving-Knoten-Steuerungsebenenfunktionalität (SC), die Gateway-Knoten-Benutzerebenenfunktionalität (GU) und die Gateway-Knoten-Steuerungsebenenfunktionalität (GC) Softwareanwendungen sind; und wobei anwendungseinheitenübergreifende Kommunikation mit dem kombinierten Knoten (CGSN) durch Prozedurfernaufrufe (RPC) von einer Zentralverarbeitungseinheit (CPU) einer Anwendungseinheit (AU) an die Zentralverarbeitungseinheit einer anderen Anwendungseinheit (AU) über den internen Bus durchgeführt wird.

2. Kombinierter Knoten nach Anspruch 1, wobei die erste Anwendungseinheit (AU TYP1) außerdem eine Serving-Knoten-Steuerungsebenenfunktionalität (SC) und eine Gateway-Knoten-Steuerungsebenenfunktionalität (GC) umfasst.

3. Kombinierter Knoten nach Anspruch 1 oder 2, wobei die zweite Anwendungseinheit (AU TYP1) außerdem eine Serving-Knoten-Benutzerebenenfunktionalität (SU) und eine Gateway-Knoten-Benutzerebenenfunktionalität (GU) umfasst.

4. Verfahren zum Zuweisen verfügbarer Ressourcen in einem kombinierten Knoten (CGSN) zu mindestens einem mobilen Endgerät (MT),
wobei der kombinierte Knoten (CGSN) mindestens umfasst: eine erste Anwendungseinheit (AU TYP2, AU TYP1), eine zweite Anwendungseinheit (AU TYP3, AU TYP1) und eine Leitweglenkungseinheit (GiR), die eine Netzwerkschnittstelle (Gi) bereitstellt, wobei über diese Leitweglenkungseinheit Datenpakete der Benutzerebene mindestens zum Internet übertragen werden können, wobei:
eine erste Anwendungseinheit (AU TYP2, AU TYP1) eine Serving-Knoten-Benutzerebenenfunktionalität (SU) und eine Gateway-Knoten-Benutzerebenenfunktionalität (GU) umfasst, wobei jede einzelne Funktionalität der ersten Anwendungseinheit dem mindestens einen mobilen Endgerät (MT) zugewiesen werden kann;
eine zweite Anwendungseinheit (AU TYP3, AU TYP1) eine Serving-Knoten-Steuerungsebenenfunktionalität (SC) und eine Gateway-Knoten-Steuerungsebenenfunktionalität (GC) umfasst, wobei jede einzelne Funktionalität der zweiten Anwendungseinheit mindestens dem einen oder einem anderen mobilen Endgerät (MT) zugewiesen werden kann;
wobei jede Anwendungseinheit (AU) außerdem eine Datenbasis (DB) umfasst, die Daten umfasst, die für einen gegebenen Ruf / eine gegebene Sitzung, der bzw. die einem gegebenen mobilen Endgerät zugeordnet ist, nötig sind, wobei das Verfahren die folgenden Schritte umfasst:
- Empfangen (11) eines Rufs, der eine Angliederungsanforderung von einem gegebenen mobilen Endgerät umfasst, auf der Benutzerebenenfunktionalität (SU) der ersten Anwendungseinheit (AU);
- durch die Serving-Knoten-Benutzerebenenfunktionalität (SU) erfolgendes Weiterleiten der Angliederungsanforderung zur Serving-Knoten-Steuerungsebenenfunktionalität (SC), welche eine Angliederungsbewilligung zur Serving-Knoten-Benutzerebenenfunktionalität (SU) weiterleitet, welche die Angliederungsbewilligung zu dem gegebenen mobilen Endgerät weiterleitet (14);
- durch die Serving-Knoten-Benutzerebenenfunktionalität (SU) erfolgendes Empfangen einer Aktivierungsanforderung von dem gegebenen mobilen Endgerät (MT) (15);
- Prüfen (16), ob eine IP-Adresse, die aus einem Zugangspunktnamen (APN) der Aktivierungsanforderung von dem gegebenen mobilen Endgerät aufgelöst wurde, auf den kombinierten Knoten (CGSN) zeigt, und wenn ja:
- gemeinsam Anordnen (18) der Serving-Knoten-Steuerungsebenenfunktionalität (SC) und der Gateway-Knoten-Steuerungsebenenfunktionalität (GC) auf der gleichen Anwendungseinheit (AU), wobei die Gateway-Knoten-Steuerungsebenenfunktionalität (GC) und die Serving-Knoten-Steuerungsebenenfunktionalität (SC) der zweiten Anwendungseinheit (AU) dem gegebenen mobilen Endgerät zugewiesen werden.

5. Verfahren nach Anspruch 4, wobei, wenn die IP-Adresse, die aus dem Zugangspunktnamen (APN) der Aktivierungsanforderung vom gegebenen mobilen Endgerät aufgelöst wurde, nicht auf den kombinierten Knoten (CGSN) zeigt:
- Zuweisen (17) der Gateway-Knoten-Benutzerebenenfunktionalität (GU) und der Gateway-Knoten-Steuerungsebenenfunktionalität (GC) in einem externen Knoten und Verwenden des GTP (GPRS-Tunnelungsprotokoll) zur Kommunikation zwischen der Serving-Knoten-Steuerungsebenenfunktionalität (SC) und der Gateway-Knoten-Steuerungsebenenfunktionalität (GC) und zwischen der Serving-Knoten-Benutzerebenenfunktionalität (SU) und der Gateway-Knoten-Benutzerebenenfunktionalität (GU).

6. Verfahren nach Anspruch 4, wobei die Serving-Knoten-Benutzerebenenfunktionalität (SU) und die Gateway-Knoten-Benutzerebenenfunktionalität (GU) der ersten Anwendungseinheit (AU TYP2) dem gegebenen mobilen Endgerät zugewiesen werden (19, 20).

7. Verfahren nach Anspruch 4, wobei die erste Anwendungseinheit (AU TYP1) außerdem eine Serving-Knoten-Steuerungsebenenfunktionalität (SC) und eine Gateway-Knoten-Steuerungsebenenfunktionalität (GC) umfasst;
- wobei die Serving-Knoten-Benutzerebenenfunktionalität (SU), die Serving-Knoten-Steuerungsebenenfunktionalität (SC), die Gateway-Knoten-Benutzerebenenfunktionalität (GU) und die Gateway-Knoten-Steuerungsebenenfunktionalität (GC) der ersten Anwendungseinheit (AU TYP1) dem gegebenen mobilen Endgerät zugewiesen werden (20).

8. Verfahren nach Anspruch 7, wobei die Serving-Knoten-Steuerungsebenenfunktionalität (SC) der gegebenen Anwendungseinheit (AU TYP1), die den Ruf empfängt, zugewiesen wird (13).

9. Verfahren nach Anspruch 4, wobei die Serving-Knoten-Benutzerebenenfunktionalität (SU) und die Serving-Knoten-Steuerungsebenenfunktionalität (SC) auf unterschiedlichen Anwendungseinheiten (AU TYP2, AU TYP3) zugewiesen werden (12).

## Revendications

1. Noeud combiné (CGSN) comprenant une unité de routage (GiR) fournissant une interface réseau (Gi) à travers laquelle des paquets de données de plan utilisateur d'unité de routage peuvent être transmis à au moins Internet, et un bus interne (IB), le noeud combiné comprenant en outre :
une première unité d'application (AU TYPE2, AU TYPE1) comprenant une fonctionnalité de plan utilisateur de noeud de desserte (SU) et une fonctionnalité de plan utilisateur de noeud de passerelle (GU), chaque fonctionnalité individuelle de la première unité d'application (AU) peut être allouée à au moins un terminal mobile (MT) ;
une seconde unité d'application (AU TYPE3, AU TYPE1) comprenant une fonctionnalité de plan de commande de noeud de desserte (SC) et une fonctionnalité de plan de commande de noeud de passerelle (GC), chaque fonctionnalité individuelle de la seconde unité d'application (AU) peut être allouée à au moins ledit terminal mobile (MT), ou à un autre terminal mobile ;
chaque unité d'application (AU) comprenant en outre une base de données (DB) qui comprend les données nécessaires pour la session et/ou l'appel donné associé à un terminal mobile donné ;
dans lequel chaque unité d'application (AU) comprend au moins une unité centrale (CPU) et une mémoire vive (RAM) et dans lequel la fonctionnalité de plan utilisateur de noeud de desserte (SU), la fonctionnalité de plan de commande de noeud de desserte (SC), la fonctionnalité de plan utilisateur de noeud de passerelle (GU) et la fonctionnalité de plan de commande de noeud de passerelle (GC) sont des applications logicielles ; et dans lequel la communication inter unité d'application dans ledit noeud combiné (CGSN) est assurée par des appels de procédure à distance (RPC) passés depuis une unité centrale (CPU) d'une unité d'application (AU) vers l'unité centrale d'une autre unité d'application (AU) sur le bus interne.

2. Noeud combiné selon la revendication 1, dans lequel la première unité d'application (AU TYPE1) comprend en outre une fonctionnalité de plan de commande de noeud de desserte (SC) et une fonctionnalité de plan de commande de noeud de passerelle (GC).

3. Noeud combiné selon la revendication 1 ou la revendication 2, dans lequel la seconde unité d'application (AU TYPE1) comprend en outre une fonctionnalité de plan utilisateur de noeud de desserte (SU) et une fonctionnalité de plan utilisateur de noeud de passerelle (GU).

4. Procédé d'allocation de ressources disponibles dans un noeud combiné (CGSN) à au moins un terminal mobile (MT),
le noeud combiné (CGSN) comprenant au moins une première unité d'application (AU TYPE2, AU TYPE1), une seconde unité d'application (AU TYPE3, AU TYPE1), et une unité de routage (GiR) fournissant une interface réseau (Gi) à travers laquelle des paquets de données de plan utilisateur d'unité de routage peuvent être transmis à au moins Internet, par lequel :
une première unité d'application (AU TYPE2, AU TYPE1) comprend une fonctionnalité de plan utilisateur de noeud de desserte (SU) et une fonctionnalité de plan utilisateur de noeud de passerelle (GU), chaque fonctionnalité individuelle de la première unité d'application peut être allouée à au moins un terminal mobile (MT) ;
une seconde unité d'application (AU TYPE3, AU TYPE1) comprend une fonctionnalité de plan de commande de noeud de desserte (SC) et une fonctionnalité de plan de commande de noeud de passerelle (GC), chaque fonctionnalité individuelle de la seconde unité d'application peut être allouée à au moins ledit terminal mobile (MT), ou à un autre terminal mobile ;
chaque unité d'application (AU) comprend en outre une base de données (DB) qui comprend les données nécessaires pour une session et/ou un appel donné associé à un terminal mobile donné, le procédé comprenant les étapes suivantes consistant à :
recevoir (11) un appel comprenant une demande connexion provenant d'un terminal mobile donné sur la fonctionnalité de plan utilisateur (SU) de la première unité d'application (AU) ;
la fonctionnalité de plan utilisateur de noeud de desserte (SU) faisant suivre la demande de connexion à la fonctionnalité de plan de commande de noeud de desserte (SC) qui fait suivre une acceptation de connexion à la fonctionnalité de plan utilisateur de noeud de desserte (SU) qui fait suivre l'acceptation de connexion audit terminal mobile donné (14) ;
la fonctionnalité de plan utilisateur de noeud de desserte (SU) recevant une demande d'activation dudit terminal mobile donné (MT) (15) ;
vérifier (16) si une adresse IP a été résolue à partir d'un nom de point d'accès (APN) de la demande d'activation depuis lesdits points de terminal mobile donnés au niveau du noeud combiné (CGSN) et, si tel est le cas :
co-localiser (18) la fonctionnalité de plan de commande de noeud de desserte (SC) et la fonctionnalité de plan de commande de noeud de passerelle (GC) sur la même unité d'application (AU), où la fonctionnalité de plan de commande de noeud de passerelle (GC) et la fonctionnalité de plan de commande de noeud de desserte (SC) de la seconde unité d'application (AU) est allouée audit terminal mobile donné.

5. Procédé selon la revendication 4, dans lequel, si l'adresse IP résolue à partir du nom de point d'accès (APN) de la demande d'activation provenant du terminal mobile ne pointe pas vers le noeud combiné (CGSN) ;
le procédé consiste à allouer (17) la fonctionnalité de plan utilisateur de noeud de passerelle (GU) et la fonctionnalité de plan de commande de noeud de passerelle (GC) dans un noeud externe et à utiliser le protocole GTP (protocole de tunnellisation GPRS) pour la communication entre la fonctionnalité de plan de commande de noeud de desserte (SC) et la fonctionnalité de plan de commande de noeud de passerelle (GC) et entre la fonctionnalité de plan utilisateur de noeud de desserte (SU) et la fonctionnalité de plan utilisateur de noeud de passerelle (GU).

6. Procédé selon la revendication 4, dans lequel la fonctionnalité de plan utilisateur de noeud de desserte (SU) et la fonctionnalité de plan utilisateur de noeud de passerelle (GU) de la première unité d'application (AU TYPE2) (19, 20) sont allouées au terminal mobile donné.

7. Procédé selon la revendication 4, dans lequel la première unité d'application (AU TYPE1) comprend en outre une fonctionnalité de plan de commande de noeud de desserte (SC) et une fonctionnalité de plan de commande de noeud de passerelle (GC) ;
dans lequel la fonctionnalité de plan utilisateur de noeud de desserte (SU), la fonctionnalité de plan de commande de noeud de desserte (SC), la fonctionnalité de plan utilisateur de noeud de passerelle (GU) et la fonctionnalité de plan de commande de noeud de passerelle (GC) de la première unité d'application (AU TYPE1) sont allouées au terminal mobile donné (20).

8. Procédé selon la revendication 7, dans lequel la fonctionnalité de plan de commande de noeud de desserte (SC) est allouée (13) à l'unité d'application donnée (AU TYPE1) recevant l'appel.

9. Procédé selon la revendication 4, dans lequel la fonctionnalité de plan utilisateur de noeud de desserte (SU) et la fonctionnalité de plan de commande de noeud de desserte (SC) sont allouées (12) sur différentes unités d'application (AU TYPE2, AU TYPE3).
